# EUROPÄISCHE PATENTSCHRIFT

(11) **EP 1 352 914 B1**
(45) Veröffentlichungstag und Bekanntmachung des Hinweises auf die Patenterteilung: **21.06.2006**
(21) Anmeldenummer: 03007423.1
(22) Anmeldetag: 03.04.2003
(51) Int. Cl.: C08F 18/04, C08F 2/38

(54) **Verfahren zur Herstellung von Polyvinylester-Festharz**
Process for preparing solid resins of polyvinyl esters
Procédé de préparation de résines solides d' esters polyvinyliques

(30) Priorität: 11.04.2002 DE 10215961
(43) Veröffentlichungstag der Anmeldung: 15.10.2003
(73) Patentinhaber: Wacker Polymer Systems GmbH & Co. KG, 84489 Burghausen (DE)
(72) Erfinder: Tschirner, Peter, Dr., 84547 Emmerting (DE); Lumpp, Andreas, Dr., 84489 Burghausen (DE); Singer, Robert, Dr., 84489 Brughausen (DE); Braunsperger, Günter, 84375 Kirchdorf (DE)
(74) Vertreter: Schuderer, Michael

(56) Entgegenhaltungen:
- EP-A- 0 001 810
- EP-A- 0 573 869
- EP-A- 0 746 575
- EP-A- 0 959 114
- US-A- 5 145 923
- PATENT ABSTRACTS OF JAPAN vol. 004, no. 144 (C-027), 11. Oktober 1980 (1980-10-11) & JP 55 092655 A (UNITIKA CHEM KK), 14. Juli 1980 (1980-07-14)
- DATABASE WPI Section Ch, Derwent Publications Ltd., London, GB; Class A97, AN 1973-36066U XP002249682 & JP 48 019950 B (ROTTE CO LTD)
- DATABASE WPI Section Ch, Week 197636 Derwent Publications Ltd., London, GB; Class A14, AN 1976-68088X XP002249683 & JP 51 026499 B (LOTTE CO LTD), 6. August 1976 (1976-08-06)

## Beschreibung

Die Erfindung betriftt ein Verfahren zur Herstellung von Polyvinylacetat-Festharz in Gegenwart von das Molekulargewicht regelnden Substanzen.

Für viele Anwendungen sind die rheologischen Eigenschaften von Polymeren von entscheidender Bedeutung. Die rheologischen Eigenschaften werden bei einem gegebenen Polymer in erster Linie durch das Molekulargewicht oder den Polymerisationsgrad bestimmt. Bei Polymeren, die mittels radikalischer Polymerisation hergestellt werden, kann das Molekulargewicht auf unterschiedliche Weise eingestellt werden, beispielsweise mittels sogenannter Regler. Als Regler werden Substanzen bezeichnet, die zur Steuerung des Polymerisationsgrades der Reaktion zugesetzt werden. Sehr hohe Übertragungskonstanten weisen halogenhaltige Verbindungen und Merkaptane auf (C_{U̅}= 10⁻¹ bis 10¹). Bei derartig starken Effekten ist der Verbrauch des Reglers sehr hoch, so dass durch Dosierung desselben versucht werden muß die Konzentration konstant zu halten.

Aus der DE-A 2830324 ist bekannt, Polyvinylacetat, welches insbesondere als Basispolymer für Kaugummimassen eingesetzt wird, in Gegenwart von Acetaldehyd als Regler herzustellen. Nachteilig ist, dass das so hergestellte Polyvinylacetat instabil bei thermischer Belastung und in Kontakt mit nucleophilen Substanzen ist. So kann bei Lagerung für mehrere Stunden bei 120°C neben einer starken Gelbverfärbung ein stechender Geruch nach Essigsäure festgestellt werden. Durch den Kontakt mit Basen und anderen Nucleophilen, wie zum Beispiel dem Süßstoff Aspartam wird eine Gelb-Braun-Färbung des Produktes beobachtet. Die eben beschriebenen Effekte sind auf die Verwendung von Acetaldehyd als Regler zurückzuführen. Durch die Regelung mit Acetaldehyd werden Methylketonendgruppen ins Polymere eingeführt, so dass eine acide CH₂- Gruppe im Molekül vorhanden ist, die durch Basen in das entsprechende Anion überführt werden kann. Das System stabilisiert sich dann unter Abspaltung einer Acetatgruppe und der Ausbildung eines α,β-ungesättigten Ketons. Die entstandene vinyloge Carbonylverbindung weist wieder eine acide CH₂- Gruppe auf, so dass sich der ganze Vorgang wiederholen kann. Es kann UV- spektroskopisch nachgewiesen werden, dass sich in kürzester Zeit ein konjugiertes Doppelbindungssystem mit ca. 5 bis 6 Doppelbindungen ausbildet. Bei erhöhter Temperatur sind bereits die im Polymeren vorhandene Spuren von Essigsäure und Wasser nucleophil genug, um zur Ausbildung von konjugierten Doppelbindungssystemen zu führen.

Aus den japanischen Patentanmeldungen JP-A 01026602 und JP-A 57105410 ist bekannt, niedermolekulares Polyvinylacetat in Gegenwart von Mercaptanen zu polymerisieren. Nachteilig dabei ist der bleibende Geruch dieser Polymeren, ihre starke Neigung gefärbte, gelbe Produkte zu liefern und die technische Schwierigkeit, kleinste Mengen über längere Zeiträume konstant zu dosieren (dies ergibt sich aus den großen Übertragungskonstanten dieser Verbindungen).

In der EP-A 0959114 werden Vinylester-Copolymere zur Verfügung gestellt, welche durch innere Weichmachung mittels Copolymerisation von Olefinen hergestellt werden, ohne dass eine störende Oberflächenklebrigkeit resultiert.

In der EP-A 0746575 wird beschrieben wie bei der Herstellung von Copolymeren aus Vinylestern und ethylenisch ungesättigten Carbonsäuren die Zersetzung des Vinylester-Anteils unter Polymerisationsbedingungen durch Zusatz einer Kombination aus reduzierender Komponente und oberflächenaktiver Substanz eingedämmt wird.

In der EP-A 0573869 werden bei der kontinuierlichen Polymerisation von Ethylen und Vinylestern Temperaturschwankungen dadurch vermieden, dass der Temperaturanstieg pro Zeitintervall in einem definierten Intervall gehalten wird.

In der US-A 5145923 wird die Polymerisation von Vinylacetat und Ethylen bei höherer Temperatur dadurch ermöglicht, dass in Anwesenheit von Lösungsmittel und Emulgator polymerisiert wird.

Aus der EP-A 00001810 ist ein Verfahren bekannt Vinylester-Crotonsäure-Copolymere mit möglichst wenig Restmonomernteil zur Verfügung zu stellen.

In dem Verfahren aus der JP-A 55-092655 wird die Herstellung von Vinylalkohol-Ethylen-Copolymeren durch die Entfernung des bei der Verseifung gebildeten Ethylacetats verbessert.

Die JP-B 48-019950 beschreibt ein Verfahren bei welchem Vinylacetat in Gegenwart von Polyester und Peroxid in Ethanol polymerisiert wird.

Die JP-B 51-026499 betrifft die Weichmachung von Kaugummimassen auf Basis von Polyvinylacetat-Festharzen.

Zur Herstellung von Polyvinylacetat-Festharz für das Einsatzgebiet Kaugummi müssen aber regelnde Substanzen eingesetzt werden, um niedrige Molekulargewichte zu erhalten, die erwünscht sind, da dadurch die Kaueigenschaften (rheologische Eigenschaften) mitbestimmt werden. Es bestand daher die Aufgabe, ein Verfahren zur Herstellung von Polyvinylester-Festharz zur Verfügung zu stellen, mit dem niedermolekulare Polymerisate zugänglich werden, ohne dass die obengenannten unerwünschten Nebeneffekte wie thermische und chemische Instabilität auftreten.

Gegenstand der Erfindung ist ein Verfahren zur Herstellung von Polyvinylacetat-Festharz mit dem Masse- oder Lösungs-Polymerisationsverfahren in Gegenwart von das Molekulargewicht regelnden Substanzen wobei Vinylacetat polymerisiert wird, dadurch gekennzeichnet, dass in Gegenwart von Isopropanol polymerisiert wird, und die Monomere und der Regler in dem gewünschten, für die Einstellung des Polymerisationsgrades notwendigen, molaren Verhältnis von Monomer zu Regler vorgelegt werden, gegebenenfalls ein Teil des Initiators zugegeben wird, und nach Erreichen eines Umsatzes von 40 bis 60 % die restliche Monomermenge und gegebenenfalls der restliche Initiator zudosiert werden, mit einer Dosierrate, welche sicherstellt, dass das angestrebte molare Verhältnis Monomer/Regler erreicht und über den gesamten Reaktionszeitraum konstant bleibt.

Das Vinylacetat kann gegebenenfalls mit einem oder mehreren weiteren Monomeren copolymerisiert werden. Geeignete Comonomere sind Isopropenylacetat, Ethylen und Propylen. Als funktionelle Comonomere können carboxylgruppenhaltige Monomere wie Crotonsäure, Acrylsäure, Maleinsäure, Fumarsäure, Itaconsäure, und hydroxylgruppenhaltige Monomere wie Hydroxyethylacrylat und Hydroxypropylacrylat. Bei den Vinylacetat-Mischpolymerisaten beträgt der Comonomeranteil 0.1 bis 30 Gew.-%, vorzugsweise 1 bis 10 Gew.-%, jeweils bezogen auf das Gesamtgewicht der Monomere. Am meisten bevorzugt werden als Comonomere ein oder mehrere aus der Gruppe umfassend Isopropenylacetat, Ethylen, Crotonsäure und Acrylsäure.

Die Menge an der das Molekulargewicht regelnden Substanz (Regler) wird im allgemeinen so bemessen, dass das molare Verhältnis von Vinylacetat und gegebenenfalls weiterem Comonomer zum Regler von 0.05 bis 40, vorzugsweise 0.1 bis 20, beträgt. Die Menge an Regler hängt vom gewünschten Molekulargewicht und dem eingesetzten Polymerisationsverfahren, ob Batch-, Semibatch-Verfahren oder kontinuierliche Polymerisation ab, und kann vom Fachmann über Abschätzung mittels der Copolymerisationsgleichung in bekannter Weise ermittelt werden.

Die Herstellung der Polyvinylacetat-Festharze erfolgt nach dem Massepolymerisations- oder Lösungspolymerisations-Verfahren abhängig davon, wieviel Regler eingesetzt wird. Die Reaktion wird im allgemeinen unter Rückflußbedingungen, im allgemeinen bei einer Polymerisationstemperatur von 40°C bis 140°C, durchgeführt, um die Siedekühlung zur Abführung der Reaktionswärme zu nutzen. Dies kann bei Normaldruck als auch unter leichtem Überdruck erfolgen. Bei der Copolymerisation von gasförmigen Comonomeren wie Ethylen kann auch bei höheren Drucken, im allgemeinen bei 5 bis 100 bar gearbeitet werden. Wenn die Reaktion unter Normaldruck durchgeführt wird, ist es von Vorteil am Ende der Reaktion einen leichten Überdruck auf das Reaktionssystem zu geben, vorzugsweise 0.5 bis 3 bar, um dem System von außen Energie zuzuführen zu können um einen möglichst hohem Umsatz zu erreichen, und das Abdestillieren des restlichen Monomeren und des Reglers möglicht effektiv zu gestalten.

Als Inititatoren werden organische Peroxide oder Azoverbindungen verwendet. Geeignet sind beispielsweise Diacylperoxide wie Dilauroylperoxid, Peroxoester wie t-Butylperoxopivalat oder t-Butylperoxo-2-ethylhexanoat, oder Peroxodicarbonate wie Diethylperoxodicarbonat. Die Initiatormenge beträgt im allgemeinen von 0.01 bis 5.0 Gew.-%, bezogen auf die Monomeren. Die Initiatoren können sowohl vorgelegt als auch dosiert werden. Dabei hat es sich bewährt, einen Teil der benötigten Initiatormenge vorzulegen und den Rest kontinuierlich während der Reaktion zu dosieren. Die vorgelegte Teilmenge bemisst sich dabei an der Menge, in welcher das Monomer und der Regler vorgelegt werden. Es kann von Vorteil sein unterschiedlich zerfallende Initiatoren zu verschiedenen Zeitpunkten der Reaktion zu dosieren. Einen niedrig zerfallenden zu Beginn und einen bei höherer Temperatur sich zersetzenden Initiator am Ende der Reaktion, gegebenenfalls bei erhöhtem Druck.

Da vor allem zur Herstellung sehr niedermolekularer Substanzen große Mengen an Regler eingesetzt werden müssen, empfiehlt es sich nach einem Semi-Batchverfahren zu arbeiten, um eine möglichst hohe Raum-Zeit-Leistung des Reaktors zu erzielen.

Bei dem Semi-Batchverfahren werden die Monomere und der Regler in dem gewünschten, für die Einstellung des Po-lymerisationsgrades notwendigen, molaren Verhältnis von Monomer zu Regler vorgelegt, und gegebenenfalls ein Teil des Initiators zugegeben. Vorzugsweise werden 5 bis 20 Gew.-% der Gesamtmenge des Monomer-Regler-Gemisches vorgelegt. Die Reaktion wird mittels Temperaturerhöhung und gegebenenfalls Initiatorzugabe gestartet. Nach Erreichen eines Umsatzes von 40 bis 60 % wird die restliche Monomermenge und gegebenenfalls der restliche Initiator zudosiert, und zwar mit einer Dosierrate, welche sicherstellt, dass das angestrebte molare Verhältnis Monomer/Regler erreicht und über den gesamten Reaktionszeitraum konstant bleibt.

Nach dem Ende der exothermen Reaktion werden vorzugsweise die restlichen freien Monomeren und der Regler destillativ entfernt. Um einen sehr niedrigen VOC-Gehalt zu erhalten, wird die Innentemperatur bis auf 100°C bis 160°C erhöht und anschließend ein Vakuum angelegt. Hierbei hat es sich als besonders vorteilhaft herausgestellt, dass Isopropanol als Schleppmittel für Vinylacetat wirkt und somit das restliche Vinylacetat besonders rasch entfernt werden kann. Zur Entfernung der restlichen Reglermengen kann es von Vorteil sein gegen Ende der Destillation kleine Mengen an Wasser als Schlepper für den Regler zuzusetzen.

Mit der beanspruchten Vorgehensweise werden Polyvinylacetat Festharze mit einem gewichtsmittleren Molekulargewicht Mw von 2000 bis 500000, vorzugsweise 10000 bis 100000 zugänglich.

Die Polyvinylacetat Festharze können in fester Form oder als Lösung in organischen Lösungsmittel verwendet werden. Sie eignen sich als Bindemittel in Lacken und zur Herstellung von Klebemittel, insbesondere von heißsiegelbaren Beschichtungen sowie Kaschiermitteln. Weitere Anwendungsgebiete sind die als Grundstoffe für Appreturen und Kaugummimassen.

Mit dem beanspruchten Verfahren werden niedermolekulare Polyvinylacetat-Festharze zugänglich, welche sich gegenüber den mit herkömmlichen Verfahren hergestellten durch thermische und chemische Stabilität auszeichnen.

### Beispiele:

### Beispiel 1 :

### Isopropanol-Regelung mit Dosierfahrweise

In einem 250l-Reaktor wurden 30 kg Isopropanol und 10 kg Vinylacetat mit 45 ml t-Butylperoxopivalat (75 %-ig in Isododecan) vorgelegt, der Reaktor wurde auf 65°C aufgeheizt. Nach dem Erreichen der Innentemperatur wurde die Energiezufuhr gestoppt. Die Reaktion sprang an. Sobald die Innentemperatur 76°C erreicht hatte, wurde die Vinylacetatdosierung eingefahren. Vinylacetat wurde mit folgendem Gradienten dosiert: Zunächst wurde mit 11 kg/h begonnen und innerhalb von 2.5 Stunden die Dosierrate auf 45 kg/h Stunden gesteigert. Insgesamt wurden 194 kg dosiert.
30 Minuten nach dem Start der Vinylacetatdosierung wurde die Initiatordosierung eingefahren. Es wurden 300 g t-Butylperoxopivalat und 170 g t-Butylperoxo-2-ethylhexanoat gelöst in 1.5 Liter Isopropanol mit gleichbleibender Geschwindigkeit über 7 Stunden dosiert. Nach dem Ende der Initiatordosierung und dem Abfall der Innentemperatur auf 75°C wurden das Isopropanol und das restliche Vinylacetat abdestilliert. Zunächst bei Normaldruck, anschließend unter Vakuum bei einem Druck von 0.9 bar absolut. Zum Entfernen restlicher Spuren an flüchtigen organische Substanzen wurde zweimal jeweils ein Liter Wasser zugesetzt und unter Vakuum abdestilliert. Ausbeute: 202 kg (99 %) Polyvinylacetat, Viskosität einer 10 %-igen Lösung in Ethylacetat: 1.3 mPas, Zahlenmittleres Molekulargewicht Mn: 5900, Gewichtsmittleres Molekulargewicht Mw: 15000,
U: 2.5,
Lagerstabilität (12 Stunden bei 130°C): Farb- und geruchslos.

### Beispiel 2 :

Verfahren wie in Beispiel 1, jedoch wurden 80 kg Vinylacetat und 24 kg Isopropanol vorgelegt, und insgesamt 140 kg Vinylacetat dosiert.
Ausbeute 216 kg (98 %)
Viskosität einer 10 %-igen Lösung in Ethylacetat: 2.18 mPas, Zahlenmittleres Molekulargewicht Mn: 10700
Gewichtsmittleres Molekulargewicht Mw: 28300
U: 2.64
Lagerstabilität (12 Stunden bei 130°C): Farb- und geruchslos

### Beispiel 3:

Verfahren wie in Beispiel 1, jedoch wurden 77.5 kg Vinylacetat und 13 kg Isopropanol vorgelegt, und insgesamt 158 kg Vinylacetat dosiert.
Ausbeute 231 kg (99 %)
Viskosität einer 10 %-igen Lösung in Ethylacetat: 2.81 mPas, Zahlenmittleres Molekulargewicht Mn: 13500
Gewichtsmittleres Molekulargewicht Mw : 48100
U: 3.55
Lagerstabilität (12 Stunden bei 130°C): Farb- und geruchslos

### Beispiel 4:

Verfahren wie in Beispiel 1, jedoch wurden 62 kg Vinylacetat und 9 kg Isopropanol vorgelegt, und insgesamt 166 kg Vinylacetat dosiert.
Ausbeute 223 kg (98 %),
Viskosität einer 10 %-igen Lösung in Ethylacetat: 2.18 mPas, Zahlenmittleres Molekulargewicht Mn: 16100,
Gewichtsmittleres Molekulargewicht Mw: 53600,
U: 3.32,
Lagerstabilität (12 Stunden bei 130°C) : Farb- und geruchslos.

### Vergleichsbeispiel 5 :

### Acetaldehyd-Regelung

In einem 250l-Reaktor wurden 166 kg Vinylacetat, 15 kg Acetaldehyd und 80 g t-Butylperoxo-2-ethylhexanoat vorgelegt. Anschließend wurde der Reaktor auf 65°C aufgeheizt. Nach dem Erreichen der Innentemperatur wurde die Energiezufuhr gestoppt. Die Reaktion sprang an. Nach ca. 4.5 Stunden war die exotherme Reaktion abgeklungen, es wurde nun mit der Kesselmantelheizung zur Nachreaktion für 2 Stunden nachgeheizt, maximale Innentemperatur 120°C. Daraufhin wurden die restlichen organischen Bestandteile destillativ entfernt, zunächt unter Normaldruck, anschließend unter Vakuum bei einem Druck von 0.9 bar absolut. Zum Entfernen restlicher Spuren an flüchtigen organischen Substanzen wurde dreimal jeweils ein Liter Wasser zugesetzt und unter Vakuum abdestilliert.
Ausbeute: 142 kg (85 %) Polyvinylacetat
Viskosität einer 10 %-igen Lösung in Ethylacetat: 1.3 mPas, Zahlenmittleres Molekulargewicht Mn: 6000
Gewichtsmittleres Molekulargewicht Mw: 14100
U: 2.35
Lagerstabilität (12 Stunden bei 130°C): Gelbfärbung, starker Geruch nach Essigsäure

Prüfung der Produkte aus den (Vergleichs)beispielen 1 bis 5 bezüglich deren thermischer Stabilität:

Zur Prüfung der Produkte auf ihre thermische Stabilität wurden 20 g Produkt in ein 100 ml Schraubgefäß gefüllt und gasdicht verschlossen. Anschließend wurden die Proben für 12 Stunden in einem 130°C heißem Trockenschrank gelagert. Zur Beurteilung der thermischen Stabilität wurde zum einen optisch mit dem Auge die Verfärbung beurteilt, zum andern wurde das Glas geöffnet und der Geruch beurteilt. Die Ergebnisse sind in Tabelle 1 zusammengefaßt:

**Tabelle 1:**

| Beispiel | Farbe | Geruch | Regler |
|---|---|---|---|
| Beispiel 1 | Farblos | Keiner | Isopropanol |
| Beispiel 2 | Farblos | Keiner | Isopropanol |
| Beispiel 3 | Farblos | Keiner | Isopropanol |
| Beispiel 4 | Farblos | Keiner | Isopropanol |
| Vergleichsbeispiel 5 | Gelb | Essigsäure | Acetaldehyd |

Prüfung der Produkte aus den (Vergleichs)beispielen 1 bis 5 bezüglich deren chemischer Stabilität gegen Nukleophile:

Test 1: Das Festharz wurde bei 120°C für 30 Minuten innig mit Aspartam (16 Gew.-%) vermischt, anschließend wurde die Farbe und der Geruch bestimmt. Die Ergebnisse sind in Tabelle 2 zusammengefaßt.

**Tabelle 2:**

| Beispiel | Farbe | Geruch | Regler |
|---|---|---|---|
| Beispiel 1 | Weiss | Keiner | Isopropanol |
| Beispiel 2 | Weiss | Keiner | Isopropanol |
| Beispiel 3 | Weiss | Keiner | Isopropanol |
| Beispiel 4 | Weiss | Keiner | Isopropanol |
| Vergleichsbeispiel 5 | Braun | Essigsäure | Acetaldehyd |

Test 2: 10 g Festharz wurden in 90 ml Methanol gelöst und dann mit 30 ml Wasser versetzt. Der Lösung wurde als Indikator etwas Phenolphthaleinlösung zugegeben und mit 0.1 n NaOH auf den Farbumschlag nach rosa eingestellt. Es wurde beobachtet, ob sich die Lösung wieder entfärbt, was auf einen Laugeverbrauch zurückzuführen wäre. Die Ergebnisse sind in Tabelle 3 zusammengefaßt.

**Tabelle 3:**

| Beispiel | Farbumschlag | Regler |
|---|---|---|
| Beispiel 1 | Nein | Isopropanol |
| Beispiel 2 | Nein | Isopropanol |
| Beispiel 3 | Nein | Isopropanol |
| Beispiel 4 | Nein | Isopropanol |
| Vergleichsbeispiel 5 | Ja, schnell | Acetaldehyd |

## Patentansprüche

1. Verfahren zur Herstellung von Polyvinylacetat-Festharz mit dem Masse- oder Lösungs-Polymerisationsverfahren in Gegenwart von das Molekulargewicht regelnden Substanzen wobei Vinylacetat polymerisiert wird, **dadurch gekennzeichnet, dass** in Gegenwart von Isopropanol polymerisiert wird, und die Monomere und der Regler in dem gewünschten, für die Einstellung des Polymerisationsgrades notwendigen, molaren Verhältnis von Monomer zu Regler vorgelegt werden, gegebenenfalls ein Teil des Initiators zugegeben wird, und nach Erreichen eines Umsatzes von 40 bis 60 % die restliche Monomermenge und gegebenenfalls der restliche Initiator zudosiert werden, mit einer Dosierrate, welche sicherstellt, dass das angestrebte molare Verhältnis Monomer/Regler erreicht und über den gesamten Reaktionszeitraum konstant bleibt.

2. Verfahren nach Anspruch 1, **dadurch gekennzeichnet, dass** Vinylacetat mit einem oder mehreren weiteren Monomeren copolymerisiert wird aus der Gruppe umfassend Vinylester von aliphatischen Monocarbonsäuren mit 3 bis 15 C-Atomen, Isopropenylacetat, Ethylen, Propylen, carboxylgruppenhaltige Monomere, hydroxylgruppenhaltige Monomere.

3. Verfahren nach Anspruch 1 bis 2, **dadurch gekennzeichnet, dass** die Menge an der das Molekulargewicht regelnden Substanz so bemessen wird, dass das molare Verhältnis von Vinylacetat und gegebenenfalls weiterem Comonomer zum Regler von 0.05 bis 40 beträgt.

## Claims

1. Process for preparing polyvinyl acetate solid resin using the bulk or solution polymerization process in the presence of molecular weight regulators, in which vinyl acetate is polymerized, **characterized in that** polymerization proceeds in the presence of isopropanol and the monomers and the regulator are charged initially in the desired molar ratio of monomer to regulator necessary for the degree of polymerization, if appropriate a portion of the initiator is added, and after a conversion rate of from 40 to 60% is achieved, the residual amount of monomer and if appropriate the residual initiator are added, at a metering rate which ensures that the desired molar ratio of monomer/regulator is achieved and remains constant over the entire reaction period.

2. Process according to Claim 1, **characterized in that** vinyl acetate is copolymerized with one or more further monomers selected from the group consisting of vinyl esters of aliphatic monocarboxylic acids having 3 to 15 carbon atoms, isopropenyl acetate, ethylene, propylene, carboxyl group-containing monomers, hydroxyl group-containing monomers.

3. Process according to Claims 1 to 2, **characterized in that** the amount of the molecular weight regulator is such that the molar ratio of vinyl acetate and if appropriate further comonomer to the regulator is from 0.05 to 40.

## Revendications

1. Procédé pour la préparation de résine poly(acétate de vinyle) solide par le procédé de polymérisation en masse ou en solution, en présence de substances régulatrices de masse moléculaire, de sorte que l'acétate de vinyle est polymérisé, **caractérisé en ce qu'**on effectue la polymérisation en présence d'isopropanol, et les monomères et le régulateur sont disposés au préalable en le rapport molaire, désiré pour l'ajustement du degré de polymérisation, du monomère au régulateur, éventuellement on ajoute une partie de l'amorceur et, une fois atteint un degré de conversion de 40 à 60 %, on ajoute par addition dosée la quantité restante de monomère et éventuellement l'amorceur restant, à une vitesse d'addition dosée qui garantit que le rapport molaire monomère/régulateur recherché est atteint et reste constant pendant toute la durée de la réaction.

2. Procédé selon la revendication 1, **caractérisé en ce que** l'acétate de vinyle est copolymérisé avec un ou plusieurs autres monomères choisis dans le groupe comprenant des esters vinyliques d'acides monocarboxyliques aliphatiques ayant de 3 à 15 atomes de carbone, l'acétate d'isopropényle, l'éthylène, le propylène, des monomères contenant des groupes carboxy, des monomères contenant des groupes hydroxy.

3. Procédé selon les revendications 1 et 2, **caractérisé en ce que** la quantité de la substance régulatrice de masse moléculaire est choisie de manière que le rapport molaire de l'acétate de vinyle et éventuellement d'un autre comonomère au régulateur soit de 0,05 à 40.
